# FASCICULE DE BREVET EUROPEEN

(11) **EP 3 440 378 B1**
(45) Date de publication et mention de la délivrance du brevet: **22.01.2020**
(21) Numéro de dépôt: 17713730.4
(22) Date de dépôt: 06.03.2017
(51) Int. Cl.: F16F 9/58, F16F 1/44, F16F 1/36, F16F 1/373, F16F 1/376, B60G 11/52, B60G 7/04, B60G 15/06

(54) **BUTEE D'ATTAQUE POUR LA SUSPENSION D'UN VEHICULE COMPORTANT UNE PROGRESSIVITÉ AMÉLIORÉE**
FEDERUNGSSTOSSFÄNGER FÜR DIE AUFHÄNGUNG EINES FAHRZEUGS MIT VERBESSERTEN PROGRESSIVITÄT
SUSPENSION BUMPER FOR THE SUSPENSION OF A VEHICLE COMPRISING IMPROVED PROGRESSIVITY

(30) Priorité: 04.04.2016 FR 1652929
(43) Date de publication de la demande: 13.02.2019
(73) Titulaire: PSA Automobiles S.A., 78300 Poissy (FR)
(72) Inventeur: MARCK, Olivier, 25640 Marchaux (FR); PIRANDA, Damien, 25340 Anteuil (FR); MULLER, Jerome, 25600 Nommay (FR); ALLEGRE, Jean Marc, 91470 Limours (FR); GUIGAND, Frederic, 91430 Igny (FR)
(86) Numéro de dépôt international: PCT/FR2017/050488
(87) Numéro de publication internationale: WO 2017/174886

(56) Documents cités:
- WO-A1-2005/019681
- WO-A1-2009/037207
- DE-A1-102014 206 756
- DE-U1- 8 630 181
- FR-A1- 2 644 735
- FR-A1- 2 859 003
- FR-B1- 2 643 122
- JP-A- S6 235 128
- JP-A- 2002 181 102
- JP-A- 2006 017 192
- JP-A- 2008 038 965
- JP-A- 2008 298 211
- JP-U- S62 194 103

## Description

La présente invention concerne une butée d'attaque pour une suspension d'un véhicule automobile, ainsi qu'un véhicule automobile équipé de telles butées d'attaque.

Les véhicules automobiles comportent généralement pour chaque roue une suspension comprenant un ressort de suspension, un amortisseur qui freine les mouvements de la suspension, et une butée d'attaque sur laquelle la caisse vient appuyer quand cette suspension arrive en fin de course, afin d'arrêter ce mouvement en évitant un choc.

Les butées d'attaque sont en particulier réalisées par un moulage d'une matière élastomère présentant des caractéristiques élastiques et de résistance mécanique adaptées, permettant d'obtenir en une seule opération de moulage des formes complexes.

Pour améliorer la progressivité de la raideur de la butée d'attaque, en particulier pour son début de course, on peut utiliser des matériaux élastiques présentant une déformation disposant d'une meilleure progressivité ou d'une plus faible densité. Toutefois ces matériaux améliorés présentent des coûts plus élevés, ainsi que des tenues en endurance réduites.

Dans le même but un type de butée d'attaque connu, présenté notamment par le document FR-B1-2643122, comporte une forme globalement cylindrique comprenant un perçage axial prévu pour passer la tige d'un amortisseur, formant dans la hauteur à l'intérieur et à l'extérieur une succession de bourrelets annulaires qui facilitent un écrasement axial de cette butée. De plus pour obtenir un premier contact sur la pièce en mouvement plus progressif, la face d'extrémité du corps principal, appelé nez de butée, formant une couronne assurant ce contact, comporte une série de tétons de hauteur identique répartis sur le pourtour de cette butée. On obtient ainsi d'abord une compression sur une petite hauteur des tétons présentant une section réduite, ce qui donne une faible raideur pour le début de course juste après le contact sur la butée.

Toutefois la pièce en mouvement venant simultanément en appui sur l'ensemble des tétons, on obtient une première raideur constante pendant la petite course de compression de ces tétons, suivie après par la compression du corps principal de la butée donnant une deuxième raideur beaucoup plus élevée.

La raideur de la petite course du début de ce type de butée d'attaque est peu progressive. On peut obtenir dans certains cas des bruits au contact de la butée, ainsi qu'un confort limité dû à une montée trop rapide de la force de freinage de cette butée.

On connait également du document JP S62 194103 U une butée conforme au préambule de la revendication 1 mais qui ne résout pas ou partiellement les problèmes de bruit.

La présente invention a notamment pour but d'éviter ces inconvénients de la technique antérieure.

Elle propose à cet effet une butée d'attaque pour la suspension d'un véhicule automobile, conforme à la partie caractérisante de la revendication 1

Un avantage de cette butée d'attaque est que les hauteurs variées des faces d'appui des bossages donnent au début du contact de la pièce en mouvement sur une petite course des appuis successifs suivant les hauteurs de ces faces, ce qui génère une force de rappel au début de ce contact très progressive évitant des bruits. De plus la forte progressivité dans le début du freinage évite des chocs, ce qui améliore le confort de suspension.

On notera que la butée d'attaque selon l'invention peut être réalisée de manière économique par une adaptation simple de l'outillage de moulage de butées existantes, sans modifier d'autres composants de la suspension.

La butée d'attaque selon l'invention peut de plus comporter une ou plusieurs des caractéristiques suivantes, qui peuvent être combinées entre elles.

Avantageusement, les encoches comportent un fond qui est arrondi.

Avantageusement, l'extrémité formant la couronne présente une forme extérieure conique qui se resserre vers le bas.

En particulier, les encoches peuvent comporter une hauteur supérieure à la moitié de la forme extérieure conique.

Avantageusement, la différence de hauteur entre les différentes faces d'appui est comprise entre 0,5 et 5mm.

En particulier, la différence de hauteur entre les différentes faces d'appui peut être sensiblement de 2mm.

Avantageusement, pour une course de compression démarrant après l'appui sur toutes les faces d'appui, la raideur dynamique de la butée sur une plage de plusieurs millimètres est comprise entre 20 et 30N/mm.

Avantageusement, la butée d'attaque est réalisée dans un matériau polyuréthane élastomère.

L'invention a aussi pour objet un véhicule automobile comportant des suspensions équipées de butée d'attaque comprenant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est une vue d'ensemble d'une suspension avant du type Mac Pherson d'un véhicule automobile, équipée d'une butée d'attaque selon l'art antérieur ;
- la figure 2 est une vue en coupe axiale présentant la butée d'attaque de cette suspension ;
- les figures 3 et 4 sont des vues de deux butées d'attaque différentes selon l'art antérieur ;
- la figure 5 est une vue d'une butée d'attaque selon l'invention ; et
- la figure 6 est un graphique présentant des valeurs d'efforts en fonction de la compression pour les butées d'attaque présentées figures 3, 4 et 5.

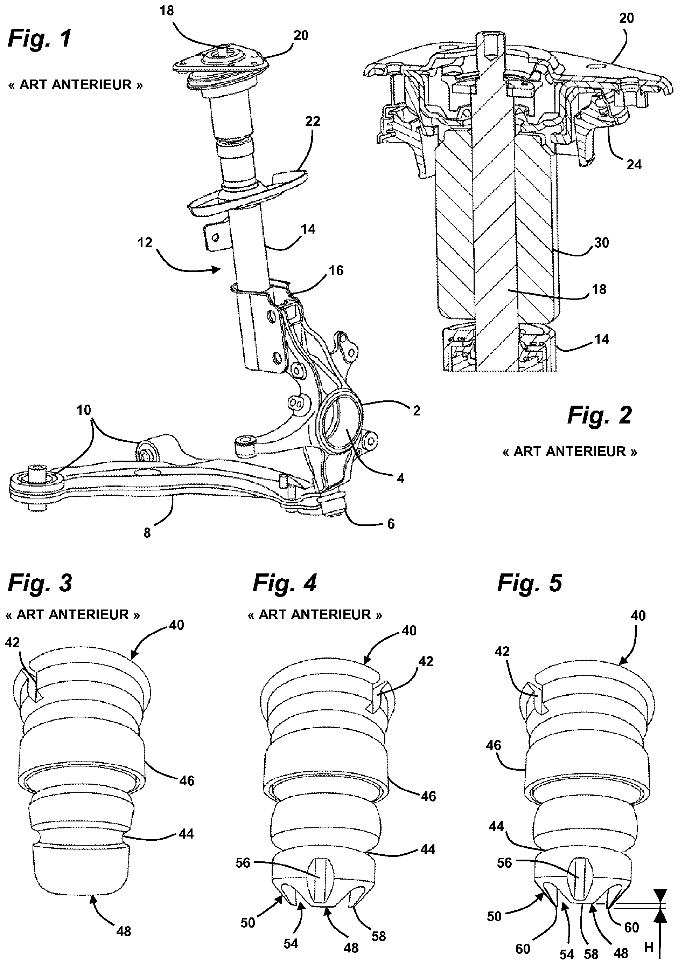

Les figures 1 et 2 présentent un porte-moyeu 2 comprenant un alésage central 4 prévu pour recevoir des roulements supportant le moyeu d'une roue, comportant à sa base une rotule 6 fixée à l'extrémité extérieure d'un triangle inférieur de suspension 8.

Le triangle de suspension 8 comporte deux pivots 10 alignés longitudinalement dans le véhicule, permettant un débattement de ce triangle autour de l'axe passant par ces deux pivots.

Un amortisseur télescopique 12 comporte un corps 14 dont la base est entourée par une chape 16 réalisée en tôle, venant enserrer la partie supérieure du porte-moyeu 2. Deux vis transversales traversent des perçages de cette chape 16 afin d'assurer un serrage résistant du porte-moyeu 2.

La tige 18 de l'amortisseur 12 comporte une partie supérieure fixée à un support 20 prévu pour être assemblé sous une tôle de la caisse du véhicule. Un ressort de suspension hélicoïdale non représenté, comporte une base en appui sur une tôle 22 fixée autour du corps de l'amortisseur 14, et un sommet en appui sur une pièce libre en rotation 24, maintenue en dessous du support 20.

Une butée d'attaque en élastomère 30 forme une pièce de révolution présentant un perçage axial recevant la tige 18, une face supérieure fixée en-dessous du support 20, et une face inférieure prévue pour recevoir l'appui de l'extrémité supérieure du corps 14 quand l'enfoncement de la suspension est suffisant.

Pour la butée d'attaque 30 présentée sur ces figures 1 et 2, la face intérieure formant une couronne d'extrémité continue est entièrement comprimée quand le corps de l'amortisseur 14 arrive dessus. On obtient tout de suite une certaine raideur peu progressive au début de l'attaque, ce qui occasionne des bruits ainsi qu'un inconfort à cause de l'arrivée brutale de cette raideur.

La figure 3 présente une butée d'attaque 30 connue comportant une face supérieure plane 40 perpendiculaire à l'axe principal de compression, prévue pour se fixer sur la caisse du véhicule, comprenant une encoche d'indexation 42 permettant de la positionner.

Le corps de la butée d'attaque 30 comporte une série de creux annulaire 44 facilitant la compression axiale de la matière. Un anneau rigide 46 enserre la partie centrale du corps de la butée d'attaque 30, afin de lui donner une meilleure tenue et d'éviter son cintrage lors d'une forte compression.

L'extrémité inférieure de la butée d'attaque 30 forme une face d'appui 48 plane qui est continue. Lors du début de compression de cette butée, on obtient rapidement une raideur élevée occasionnant des bruits et un inconfort.

La figure 4 présente une variante connue de cette butée d'attaque 30, comportant à sa base une forme extérieure conique 50 centrée sur l'axe est se resserrant vers le bas, et un creux central, ce qui laisse une face d'appui 48 formant une couronne de faible largeur comprise entre ce creux central et cette forme extérieure conique.

La face d'appui 48 comporte quatre encoches 54 régulièrement réparties comprenant un contour supérieur arrondi, et une hauteur correspondant environ aux trois quarts de la forme extérieure conique 50. Les encoches 54 laissent entre elles quatre bossages 58 comprenant chacun une largeur similaire à celle d'une encoche. Le nez de butée présente une forme générale de pétales.

De plus chaque bossage 58 comporte à l'extérieur et au milieu une rainure verticale 56 de faible profondeur commençant un peu au-dessus de la face d'appui 48, et se prolongeant pour moitié au-dessus de la forme extérieure conique 50.

On obtient une face d'appui 48 formée par l'extrémité des quatre bossages 58 présentant une surface très réduite, et une grande flexibilité due à la déformation possible de ces bossages dans la direction radiale vers le creux central et vers l'extérieur, comme dans la direction tangentielle vers les encoches 54. Les rainures verticales 56 ajoutent une facilité de déformation de ces bossages 58.

Cependant l'arrivée de la pièce en mouvement simultanément sur les quatre bossages 58 apporte une première raideur présentant une pente unique, ce qui peut occasionner des bruits et un inconfort.

La figure 5 présente une variante de la butée d'attaque présentée figure 4, comprenant deux bossages long opposés 60 présentant une hauteur un peu supérieure suivant une valeur H, qui est avantageusement comprise entre 0.5 et 5mm.

On obtient ainsi sur la première course de compression de la butée suivant la valeur H une compression de seulement deux bossages longs 60, ce qui donne une première raideur très faible. On a ensuite une compression des deux bossages suivants courts 58 qui s'ajoute, donnant une raideur plus élevée qui reste toutefois assez faible à cause des différents évidements entourant ces bossages. On obtient pour le début de course une raideur à deux pentes.

Avantageusement les bossages longs 60 sont disposés de manière alternée avec les bossages courts 58, ce qui maintient une force d'appui symétrique par rapport à l'axe de cette butée lors de l'arrivée de la pièce en mouvement.

En particulier le matériau de la butée peut être un polyuréthane élastomère.

En variante on peut disposer un nombre varié d'encoches 54, et de hauteurs de bossages supérieur à deux.

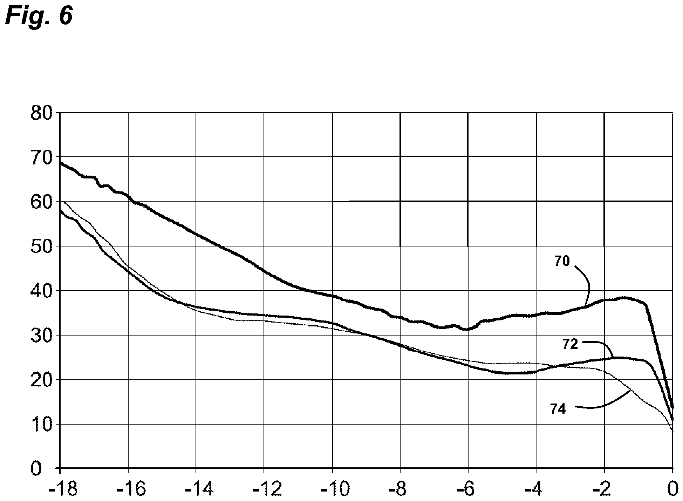

La figure 6 présente en fonction de la compression exprimée sur l'axe horizontal en millimètre, la raideur dynamique des butées exprimée en Newton par millimètre pour la butée présentée figure 3 avec la première courbe 70, figure 4 avec la deuxième courbe 72 et figure 5 avec la troisième courbe 74.

On constate sur la première courbe 70 pour la butée comprenant un nez massif, une montée rapide de la raideur sur le premier millimètre de course, qui atteint une valeur d'environ 37N/mm, puis une montée progressive à partir de huit millimètres de course.

On constate sur la deuxième courbe 72 pour la butée comprenant un nez très découpé, une montée rapide de la raideur sur le premier millimètre de course pour atteindre une valeur plus faible d'environ 25N/mm, puis ensuite jusqu'à la course de 9mm une courbe sensiblement plate comprise entre 20 et 30N/mm.

On constate sur la troisième courbe 74 pour la butée comprenant le nez très découpé ainsi qu'une différence de hauteur H entre les bossages 58, 60 de 2mm, une bonne progressivité de la raideur sur les deux premiers millimètres d'enfoncement qui limite fortement le choc d'arrivée sur cette butée.

On a ensuite pour cette troisième courbe 74 après la course de 2mm correspondant à la mise en contact sur l'ensemble des faces d'appui 48, une raideur comprise entre 20 et 30N/mm jusqu'à la course d'environ 9mm.

On réalise ainsi de manière économique, avec une simple modification de l'outillage de moulage des butées d'attaque, sans changement pour le véhicule et le procédé d'assemblage, une amélioration du confort. On peut en particulier utiliser des matériaux moins performants pour la progressivité et moins chers, en compensant la baisse de progressivité par les formes suivant l'invention permettant de retrouver un niveau équivalent.

## Revendications

1. Butée d'attaque pour la suspension d'un véhicule automobile, comportant une pièce moulée en élastomère présentant sensiblement une symétrie de révolution autour d'un axe principal de compression, cette butée comprenant une extrémité formant une couronne comportant des faces d'appui (48) prévues pour recevoir l'appui d'une pièce en mouvement, la couronne d'extrémité comportant des bossages (58, 60) séparés entre eux par des encoches (54) réparties sur le pourtour de cette couronne, **caractérisée en ce que** les bossages présentent des faces d'appui (48) disposées à des hauteurs variées, et **en ce que** les bossages (58, 60) présentent sur leur surface extérieure des rainures verticales (56).

2. Butée d'attaque selon la revendication 1, **caractérisée en ce que** les encoches (54) comportent un fond qui est arrondi.

3. Butée d'attaque selon la revendication 1 ou 2, **caractérisée en ce que** l'extrémité formant la couronne présente une forme extérieure conique (50) qui se resserre vers le bas.

4. Butée d'attaque selon la revendication 3, **caractérisée en ce que** les encoches (54) comportent une hauteur supérieure à la moitié de la forme extérieure conique (50).

5. Butée d'attaque selon l'une quelconque des revendications précédentes, **caractérisée en ce que** la différence de hauteur (H) entre les différentes faces d'appui (48, 50) est comprise entre 0,5 et 5mm.

6. Butée d'attaque selon la revendication 5, **caractérisée en ce que** la différence de hauteur (H) entre les différentes faces d'appui (48, 50) est sensiblement de 2mm.

7. Butée d'attaque selon l'une quelconque des revendications précédentes, **caractérisée en ce que** pour une course de compression démarrant après l'appui sur toutes les faces d'appui (48, 50), la raideur dynamique de la butée sur une plage de plusieurs millimètres est comprise entre 20 et 30N/mm.

8. Butée d'attaque selon l'une quelconque des revendications précédentes, **caractérisée en ce qu'**elle est réalisée dans un matériau polyuréthane élastomère.

9. Véhicule automobile comportant des suspensions équipées de butée d'attaque, **caractérisé en ce que** ces butées sont selon l'une quelconque des revendications précédentes.

## Patentansprüche

1. Federungsstoßfänger für die Aufhängung eines Kraftfahrzeugs, der einen aus Elastomer geformtes Material umfasst, das im Wesentlichen eine Rotationssymmetrieachse um eine Hauptkompressionsachse aufweist, wobei dieser Stoßfänger ein Ende umfasst, das einen Kranz bildet, der Auflageflächen (48) umfasst, die vorgesehen sind, um das Aufliegen eines Teils in Bewegung zu empfangen, wobei der Endkranz Höcker (58, 60) umfasst, die voneinander durch Kerben (54) getrennt sind, die auf dem Umfang dieses Kranzes verteilt sind, **dadurch gekennzeichnet, dass** die Höcker Auflageflächen (48) aufweisen, die in variierten Höhen angeordnet sind, und dass die Höcker (58, 60) auf ihrer Außenoberfläche vertikale Nuten (56) aufweisen.

2. Federungsstoßfänger nach Anspruch 1, **dadurch gekennzeichnet, dass** die Kerben (54) einen Grund, der gerundet ist, umfassen.

3. Federungsstoßfänger nach Anspruch 1 oder 2, **dadurch gekennzeichnet, dass** das Ende, das den Kranz bildet, eine chronische Außenform (50), die sich nach unten verengt, aufweist.

4. Federungsstoßfänger nach Anspruch 3, **dadurch gekennzeichnet, dass** die Kerben (54) eine Höhe größer als die Hälfte der konischen Außenform (50) umfassen.

5. Federungsstoßfänger nach einem der vorstehenden Ansprüche, **dadurch gekennzeichnet, dass** der Höhenunterschied (H) zwischen den unterschiedlichen Auflageflächen (48, 50) zwischen 0,5 und 5 mm liegt.

6. Federungsstoßfänger nach Anspruch 5, **dadurch gekennzeichnet, dass** der Höhenunterschied (H) zwischen den unterschiedlichen Auflageflächen (48, 50) im Wesentlichen 2 mm beträgt.

7. Federungsstoßfänger nach einem der vorstehenden Ansprüche, **dadurch gekennzeichnet, dass** die dynamische Steifigkeit des Stoßfängers auf einem Bereich von mehreren Millimetern für einen Kompressionshub, der nach dem Aufliegen auf allen Auflageflächen (48, 50) beginnt, zwischen 20 und 30 N/mm liegt.

8. Federungsstoßfänger nach einem der vorstehenden Ansprüche, **dadurch gekennzeichnet, dass** er aus einem elastomeren Polyurethan hergestellt ist.

9. Kraftfahrzeug, das Aufhängungen umfasst, die mit Federungsstoßfänger ausgestattet sind, **dadurch gekennzeichnet, dass** diese Stoßfänger nach einem der vorstehenden Ansprüche gestaltet sind.

## Claims

1. A suspension bumper for the suspension of a motor vehicle, comprising a moulded part made of elastomer being essentially symmetrical in revolution about a main axis of compression, this bumper including one end forming a crown comprising bearing faces (48) designed to receive pressure from a moving part, the end crown comprising protuberances (58, 60) that are separated from one another by notches (54) distributed over the perimeter of this crown, **characterized in that** the protuberances have bearing faces (48) arranged at various heights, and **in that** the protuberances (58, 60) have vertical grooves (56) on their exterior surface.

2. The suspension bumper according to Claim 1, **characterized in that** the notches (54) comprise a base which is rounded.

3. The suspension bumper according to Claim 1 or 2, **characterized in that** the end forming the crown has a conical exterior shape (50) which narrows towards the bottom.

4. The suspension bumper according to Claim 3, **characterized in that** the notches (54) comprise a height greater than half of the exterior conical shape (50) .

5. The suspension bumper according to any one of the preceding claims, **characterized in that** the difference in height (H) between the different support faces (48, 50) is comprised between 0.5 and 5 mm.

6. The suspension bumper according to Claim 5, **characterized in that** the difference in height (H) between the different support faces (48, 50) is substantially 2 mm.

7. The suspension bumper according to any one of the preceding claims, **characterized in that** for a compression course beginning after pressure on all the support faces (48, 50), the dynamic rigidity of the bumper over a range of several millimetres is comprised between 20 and 30 N/mm.

8. The suspension bumper according to any one of the preceding claims, **characterized in that** it is made from a polyurethane elastomer material.

9. A motor vehicle comprising suspensions equipped with a suspension bumper, **characterized in that** these bumpers are according to any one of the preceding claims.
